# FASCICULE DE BREVET EUROPEEN

(11) **EP 2 681 537 B1**
(45) Date de publication et mention de la délivrance du brevet: **15.06.2022**
(21) Numéro de dépôt: 12711949.3
(22) Date de dépôt: 28.02.2012
(51) Int. Cl.: G01N 21/91, G01N 21/954, F01D 5/00, F01D 25/28, G02B 23/24

(54) **DISPOSITIF DE RECHERCHE DE DEFAUTS SUR DES PIECES PAR ENDOSCOPIE**
VORRICHTUNG ZUM SUCHEN NACH DEFEKTEN AUF TEILEN DURCH ENDOSKOPIE
DEVICE FOR SEARCHING FOR DEFECTS ON PARTS BY ENDOSCOPY

(30) Priorité: 28.02.2011 FR 1151616; 15.03.2011 FR 1152123
(43) Date de publication de la demande: 08.01.2014
(73) Titulaire: Safran Aircraft Engines, 75015 Paris (FR)
(72) Inventeur: BOUSQUET, Sadia, F-77550 Moissy Cramayel Cedex (FR); CENDRIER, Pascal, F-77550 Moissy Cramayel Cedex (FR); LEMOAL, Jean-Claude, F-77550 Moissy Cramayel Cedex (FR); ROVEGNO, Jean, F-13600 La Ciotat (FR)
(74) Mandataire: Ernest Gutmann - Yves Plasseraud S.A.S.
(86) Numéro de dépôt international: PCT/FR2012/050411
(87) Numéro de publication internationale: WO 2012/117196

(56) Documents cités:
- EP-A1- 1 494 060
- GB-A- 2 474 834
- US-A- 5 115 136
- US-A1- 2005 041 097

## Description

L'invention concerne un dispositif de recherche par endoscopie de défauts de pièces masquées, c'est-à-dire non directement visibles, telles que par exemple des pièces dans une turbomachine.

Il est connu d'inspecter les composants internes d'un matériel ou d'une machine à l'aide d'un endoscope qui est un instrument optique allongé de faible diamètre que l'on fait passer par un petit orifice d'une paroi pour examiner l'aspect des composants se trouvant de l'autre côté de la paroi. Cet endoscope peut ainsi être utilisé pour procéder à l'inspection des aubes d'une turbomachine telle qu'un turboréacteur ou un turbopropulseur d'avion, sans démontage de la turbomachine.

Pour visualiser les défauts d'une pièce, il est connu d'utiliser une technique de ressuage, qui consiste à déposer des produits organiques sur la surface examinée de la pièce et à observer en éclairage ultraviolet l'imprégnation des composés organiques par la surface de la pièce. La présence de défauts est révélée après séchage de la surface de la pièce et dépôt d'un produit révélateur qui met en évidence le produit organique infiltré dans des défauts de surface de la pièce lorsque l'on éclaire la pièce avec une lumière ultraviolette.

Afin de faciliter l'utilisation de la technique de ressuage sur un moteur d'avion lorsque celui-ci est accroché sous l'aile de l'avion, il a déjà été proposé dans le document US-A-4273110, de réaliser un endoscope intégrant des moyens de contrôle par ressuage. Pour cela, l'instrument proposé comprend un fourreau cylindrique rigide et allongé de faible diamètre à l'intérieur duquel est logé un conduit servant au passage des moyens de guidage de lumière ultraviolette et de lumière visible vers une extrémité de l'instrument voisine de la pièce à examiner. L'instrument comprend également un conduit optique pour l'intégration de moyens de transmission et de formation d'images pour l'observation de la zone éclairée, et plusieurs conduits servant chacun au passage d'un des produits de ressuage.

Ce type d'instrument est relativement facile d'emploi lorsque l'on cherche à examiner une pièce masquée, c'est-à-dire non directement visible et située derrière une paroi. Pour cela, il suffit d'insérer le fourreau rigide à travers un orifice de la paroi et d'effectuer l'inspection telle que décrite précédemment. La déposante a également proposé dans sa demande antérieure FR2857094 de réaliser le ressuage et l'observation à l'aide de deux endoscopes séparés. Dans une autre demande antérieure FR2861185, la demanderesse a proposé un endoscope à éclairage ultraviolet et à visée distale déviée, l'endoscope comprenant un corps tubulaire rigide.

Toutefois, ces dispositifs antérieurs nécessitent plusieurs conduits indépendants pour le passage des différents produits de ressuage, ce qui impose une section importante de l'endoscope et réduit son utilisation aux orifices ou passages suffisamment grands.

L'invention a notamment pour but d'apporter une solution simple, satisfaisante et peu coûteuse à ce problème.

A cette fin, elle propose, un dispositif de recherche de défauts sur des pièces masquées accessibles par un passage non rectiligne, dans une turbomachine telle qu'un turboréacteur ou un turbopropulseur d'avion, comprenant une gaine tubulaire et des moyens de guidage de lumière et de transmission d'images logés dans la gaine pour l'éclairage et l'observation d'une pièce à examiner, caractérisé en ce qu'il comprend une tête d'examen à l'extrémité distale de la gaine, comportant des moyens d'éclairage et de prise d'images reliés aux moyens de guidage de lumière et de transmission d'images logés dans la gaine, des moyens de pulvérisation en succession de produits de ressuage sur la pièce à examiner, comportant un capillaire guidé à coulissement dans un conduit logé dans la gaine, et en ce qu'il comprend des moyens de réglage de l'orientation de la tête d'examen à l'extrémité distale de la gaine, dans lequel la gaine tubulaire est flexible et le capillaire est souple, et dans lequel l'extrémité distale de la gaine est équipée d'un embout de pulvérisation à son extrémité distale.

L'intégration d'un conduit à l'intérieur de la gaine permet l'insertion et le retrait d'un capillaire de passage d'un produit de ressuage, qui est monté à l'intérieur du conduit à coulissement, ce qui permet d'utiliser successivement plusieurs capillaires, chaque capillaire étant dédié au passage d'un produit de ressuage particulier. Le diamètre de la gaine tubulaire peut ainsi être réduit par rapport à une gaine de la technique antérieure.

L'insertion du capillaire à coulissement à l'intérieur du conduit permet aussi de rapprocher l'extrémité distale du capillaire de la zone de la pièce sur laquelle on souhaite appliquer un produit de ressuage. De cette manière, les moyens d'éclairage et de prises d'images peuvent être situés en retrait par rapport à l'extrémité distale du capillaire. Cela évite que des projections d'un produit de ressuage puissent se déposer sur les moyens d'éclairage et de prise d'images. Lorsque l'opérateur souhaite observer la zone traitée, il tire sur la partie proximale du capillaire pour rapprocher son extrémité distale de l'extrémité distale de la gaine.

Selon une autre caractéristique de l'invention, le dispositif comprend des moyens de soufflage d'air sur les moyens d'éclairage et de prise d'images montés à l'extrémité distale de la gaine.

Les moyens de soufflage d'air évitent la pollution des moyens d'éclairage et de prises d'images par les différents produits de ressuage injectés à travers les capillaires dédiés montés successivement à l'intérieur du conduit.

Dans une réalisation particulière des moyens de soufflage, ceux-ci comprennent des moyens d'alimentation en air sous pression raccordés à un tube de soufflage débouchant à son extrémité distale au voisinage des moyens d'éclairage et de prise d'images.

Dans une réalisation préférée de l'invention, les moyens d'alimentation en air sous pression sont raccordés à l'extrémité proximale du conduit de passage du capillaire pour l'alimentation du conduit par un flux d'air continu sortant par son extrémité distale.

En fonctionnement, le flux d'air qui s'écoule en permanence entre la surface interne du conduit et le capillaire, évite que des gouttes de produits de ressuage tels que de l'acétone, un pénétrant, un émulsifiant, un révélateur ou bien de l'eau de lavage se déposent à l'intérieur du conduit.

Selon une autre caractéristique de l'invention, l'extrémité proximale de la gaine flexible est reliée à une poignée destinée à être fixée sur la turbomachine et le conduit logeant le capillaire se prolonge à l'intérieur de la poignée et est raccordé à un tube rigide porté par la poignée et servant à l'insertion du capillaire à l'intérieur du conduit.

Selon une autre caractéristique de l'invention, le dispositif comprend des moyens d'immobilisation en coulissement du capillaire à l'intérieur du conduit, constitués par un embout destiné à être engagé et retenu sur l'extrémité libre du tube rigide, l'embout comportant des moyens de serrage du capillaire par pincement de celui-ci.

Dans une réalisation particulière de l'invention, l'embout comprend un passage débouchant à l'intérieur du tube et formant une entrée destinée à être raccordée aux moyens d'alimentation en air sous pression.

Dans cette configuration, l'embout comprenant les moyens de serrage assure également le raccordement aux moyens d'alimentation en air sous pression.

Selon une autre caractéristique de l'invention, les moyens de réglage de l'orientation comprennent un organe de commande de l'orientation angulaire de la tête d'examen montée à rotation sur la poignée endoscopique et reliée à des moyens de transmission de la commande d'orientation de la tête d'examen, ces moyens de transmission étant logés dans la gaine.

La rotation de l'organe de commande dans un sens ou dans l'autre permet d'induire une inclinaison de la tête d'examen par rapport au reste de la gaine.

Dans une réalisation particulière de l'invention, les moyens de réglage de l'orientation de la tête d'examen comprennent au moins deux câbles guidés à l'intérieur de la gaine et fixés à leur extrémité distale sur la tête d'examen en deux points diamétralement opposés et enroulés en tension à leur partie proximale dans des sens inverses sur un organe de commande rotatif prévu sur la poignée.

Dans une autre réalisation particulière de l'invention, les moyens de transmission de la commande d'orientation comprennent au moins une tige s'étendant à l'intérieur de la gaine et reliée à son extrémité distale à un mécanisme de conversion du mouvement de rotation de la bague en un mouvement de translation de la tige, la tige étant reliée par son extrémité distale à un doigt articulé à rotation sur l'extrémité distale de la gaine autour d'un axe perpendiculaire à celle-ci.

Le doigt distal comprend avantageusement un canal axial de passage du capillaire et est articulé à rotation entre une position dans laquelle il est aligné avec l'axe de la gaine et une position dans laquelle il est orienté perpendiculairement à l'axe de la gaine.

La rotation du doigt articulé induit une rotation de l'extrémité distale du capillaire, ce qui permet d'orienter angulairement dans l'espace l'extrémité distale du capillaire pour réaliser la projection des produits de ressuage sur la pièce à contrôler.

La gaine tubulaire est flexible et le capillaire est souple, ce qui permet de réaliser un contrôle non destructif sur une pièce se trouvant à l'intérieur d'une structure tridimensionnelle complexe et accessible uniquement par un passage étroit et non rectiligne, ce qui n'est pas possible avec un endoscope à structure rigide.

L'embout de pulvérisation à l'extrémité distale du capillaire est préférentiellement amovible et sélectionnable dans un ensemble d'embouts de pulvérisation radiale, prograde et rétrograde.

Dans une réalisation pratique de l'invention, la gaine a une section circulaire d'un diamètre compris entre 6 et 10 mm et le conduit de passage du capillaire a un diamètre de l'ordre de 1,2 mm, le capillaire ayant un diamètre de l'ordre de 0,8 mm.

Selon une autre caractéristique de l'invention, le dispositif comprend des moyens de fixation sur une partie de turbomachine, ces moyens comprenant un bras articulé relié à la poignée.

L'invention concerne également un procédé de contrôle non destructif d'une pièce masquée à l'intérieur d'une structure tridimensionnelle, au moyen du dispositif décrit précédemment, le procédé consistant à :
- insérer et guider la tête d'examen à l'intérieur d'une structure tridimensionnelle jusqu'à une position d'examen de la pièce à contrôler,
- la tête d'examen étant placée en regard de la pièce à examiner, alimenter l'extrémité proximale du capillaire avec un premier produit de ressuage et appliquer ce produit par l'extrémité distale du capillaire sur la pièce à examiner ;
- retirer par coulissement le capillaire du conduit dans lequel il est logé,
- introduire par coulissement dans le conduit un second capillaire et amener son extrémité distale au voisinage de la pièce à examiner, puis alimenter l'extrémité proximale de ce second capillaire avec un second produit de ressuage et appliquer ce second produit sur la pièce à examiner.

D'autres avantages et caractéristiques de l'invention apparaîtront à la lecture de la description suivante faite à titre d'exemple non limitatif et en référence aux dessins annexés dans lesquels :
- la figure 1 est une représentation schématique d'un dispositif de recherche de défauts selon la technique antérieure ;
- la figure 2 est une vue schématique en perspective d'un dispositif de recherche de défauts selon l'invention ;
- la figure 3 est une vue schématique en coupe de la gaine flexible du dispositif selon l'invention ;
- la figure 4 est une vue schématique en perspective et à plus grande échelle de la partie proximale du dispositif de la figure 2 ;
- la figure 5 est une vue schématique de face d'un embout à l'intérieur duquel est inséré un capillaire de passage d'un produit de ressuage ;
- la figure 6 est une représentation schématique de l'extrémité distale du conduit logeant un capillaire ;
- la figure 7 est une vue schématique de la pulvérisation de produits de ressuage ;
- la figure 8a est une vue schématique en coupe de l'extrémité distale de la gaine flexible du dispositif selon l'invention ;
- la figure 8b est une représentation schématique en coupe de l'extrémité distale de la tête d'examen du dispositif selon l'invention ;
- la figure 9 est une vue en perspective d'une tête d'examen orientable du dispositif selon l'invention ;
- la figure 10 représente une vue schématique d'un bras de maintien de l'endoscope selon l'invention,
- les figures 11 à 13 représentent en perspective un équipement endoscopique à tube d'inspection rigide, adapté au contrôle par ressuage sous éclairage ultraviolet selon une réalisation de l'invention,
- la figure 14 est une vue en perspective de l'extrémité distale de l'endoscope des figures 11 à 13,
- la figure 15 est une vue en perspective et en coupe longitudinale de l'endoscope des figures 11 à 13,
- la figure 16 est une vue éclatée en perspective de l'endoscope des figures 11 à 13,
- la figure 17 est une vue éclatée en perspective de l'extrémité distale de l'endoscope des figures 11 à 13,
- la figure 18 est une vue schématique en coupe axiale partielle d'un endoscope selon une variante de réalisation de l'invention,
- la figure 19 est une vue en perspective de l'extrémité distale de l'endoscope de la figure 18.

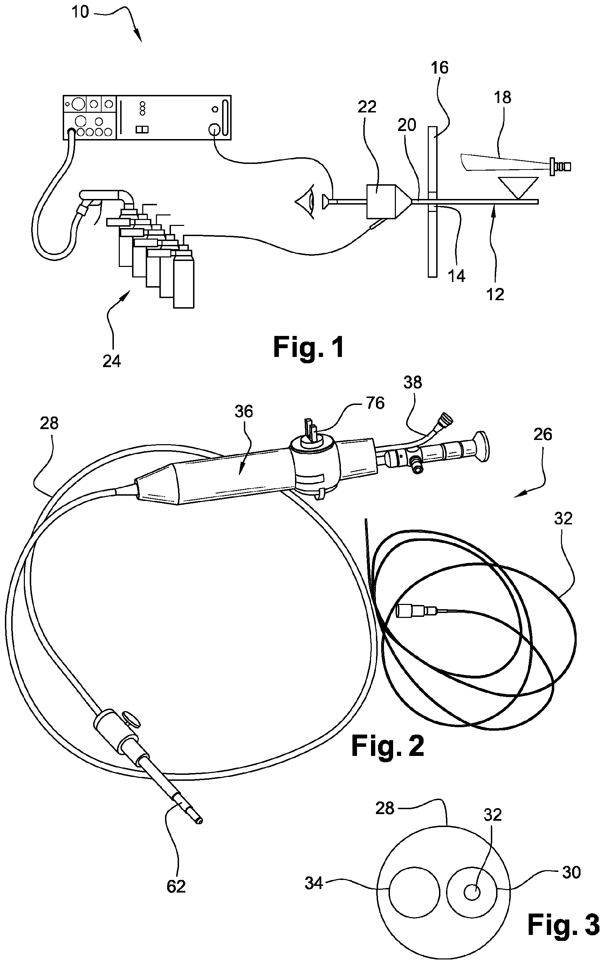

On se réfère tout d'abord à la figure 1 qui représente un dispositif de recherche de défauts 10 selon la technique antérieure, comprenant une canne cylindrique tubulaire rigide 12 destinée à être insérée par une extrémité dans un orifice endoscopique 14 réalisé par exemple dans une paroi d'un carter 16 de turbomachine à l'intérieur duquel se trouve une pièce à examiner 18 telle qu'une aube de rotor par exemple.

La canne cylindrique 12 comprend un conduit dans lequel sont logés des moyens de guidage de lumière et de transmission d'images pour l'éclairage et l'observation de la pièce. La canne cylindrique 12 comprend également un conduit de pulvérisation de produits de ressuage, tels que de l'acétone, un pénétrant, un émulsifiant et de l'eau. L'extrémité 20 de la canne 12, opposée à celle insérée à l'intérieur de l'orifice 14, est reliée par une embase 22 à des moyens d'alimentation en produits de ressuage 24 et à des moyens d'éclairage et de commande.

Ce type de dispositif nécessite l'utilisation de plusieurs conduits indépendants pour le passage des différents produits de ressuage, ce qui augmente le diamètre de l'endoscope et limite son utilisation à des orifices ou passages endoscopiques suffisamment grands.

Le dispositif 26 selon l'invention apporte une solution à cette difficulté en remplaçant la canne cylindrique rigide par une gaine flexible 28 comprenant une tête d'examen orientable 62 et en intégrant à la gaine 28 un conduit 30 logeant un capillaire 32 engagé à coulissement à l'intérieur du conduit 30 (figures 2 et 3). Sur la figure 3 est également visible un second conduit 34 qui sert au passage de moyens de guidage de lumière et de moyens de prise d'images et de transmission d'images. Ces moyens seront décrits plus en détail dans ce qui suit.

Le dispositif comprend une poignée endoscopique 36 de forme sensiblement cylindrique dont une première extrémité est reliée à l'extrémité proximale de la gaine flexible 28. La seconde extrémité de la poignée 36 porte un tube rigide coudé 38 débouchant à l'intérieur de la poignée 36 et communiquant avec le conduit 30 logeant le capillaire 32.

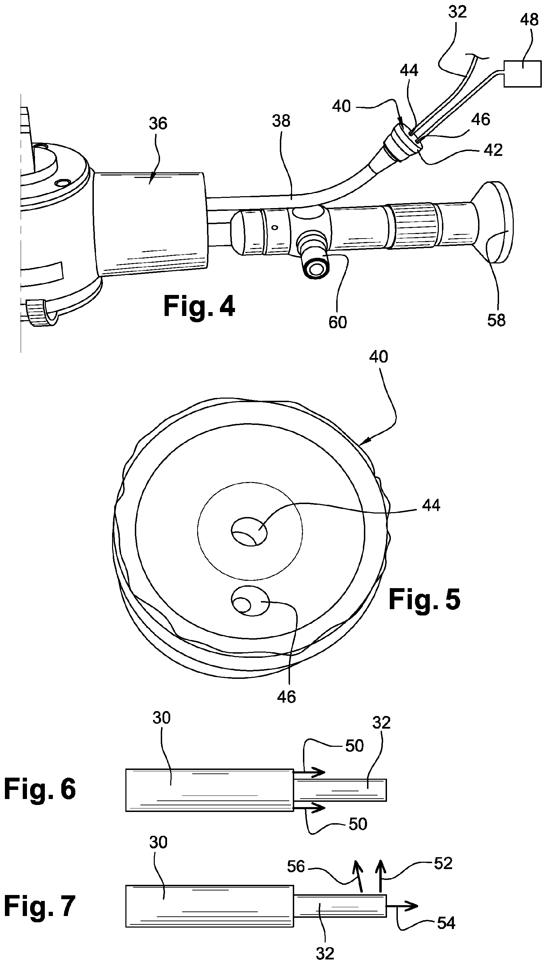

Le dispositif 26 comprend des moyens d'immobilisation du capillaire 32 à l'intérieur du conduit 30. Dans une réalisation particulière (figures 4 et 5), ces moyens comprennent un embout 40 comportant une jupe cylindrique ou tronconique 42 engagée et serrée sur l'extrémité libre du tube rigide 38. L'embout 40 comprend un orifice central 44 permettant l'insertion d'un capillaire 32 à l'intérieur du tube rigide 38 et par suite à l'intérieur du conduit 30 s'étendant à l'intérieur de la gaine flexible 28 (figures 3 et 4).

L'embout 40 comporte des moyens de serrage du capillaire 32 de manière à réaliser une immobilisation du capillaire 32 par rapport à l'embout 40. Ces moyens sont réalisés par exemple par dimensionnement du diamètre de l'orifice 44 de sorte qu'il soit légèrement inférieur au diamètre externe du capillaire 32. Ainsi, le capillaire peut être déplacé manuellement à coulissement à l'intérieur du tube 38 et se retrouve à chaque relâchement du capillaire 32 par l'opérateur dans une position immobile. Pour permettre un tel serrage, l'embout 40 est réalisé dans une matière plastique ou élastomère appropriée, telle que par exemple du caoutchouc.

Le dispositif selon l'invention comprend également des moyens de soufflage d'air au niveau de l'extrémité distale de la gaine. Pour cela, l'embout 40 comprend un second orifice 46 formé sur sa face avant et débouchant à l'intérieur du tube rigide 38. Cet orifice 46 est raccordé à des moyens d'alimentation en air sous pression 48 permettant d'alimenter le tube 38 et le conduit 30 avec un flux d'air continu 50 sortant par l'extrémité distale du conduit 30. Ainsi, le flux d'air sortant évite la pollution de l'intérieur du conduit 30 par des gouttes des différents produits de ressuage (figure 5) et limite les projections de produits de ressuage au niveau des moyens d'éclairage et de prise d'images formés à l'extrémité distale de la gaine.

Lorsque la pression du flux d'air est d'au moins 0,3 bar, il est possible de réaliser un séchage de la pièce avec les moyens d'alimentation en air, par exemple entre deux applications successives de produits de ressuage différents.

L'extrémité proximale du capillaire 32 est reliée à un réservoir d'un produit de ressuage donné. Le dispositif peut ainsi être utilisé avec plusieurs capillaires 32 chacun associé à un réservoir d'un produit de ressuage donné. Chaque capillaire comprend un embout de pulvérisation à son extrémité distale permettant de pulvériser le produit de ressuage dans une direction particulière. L'embout est avantageusement amovible et remplacé à souhait par d'autres types d'embouts aptes à réaliser une pulvérisation radiale 52, prograde 54 ou rétrograde 56 (figure 6).

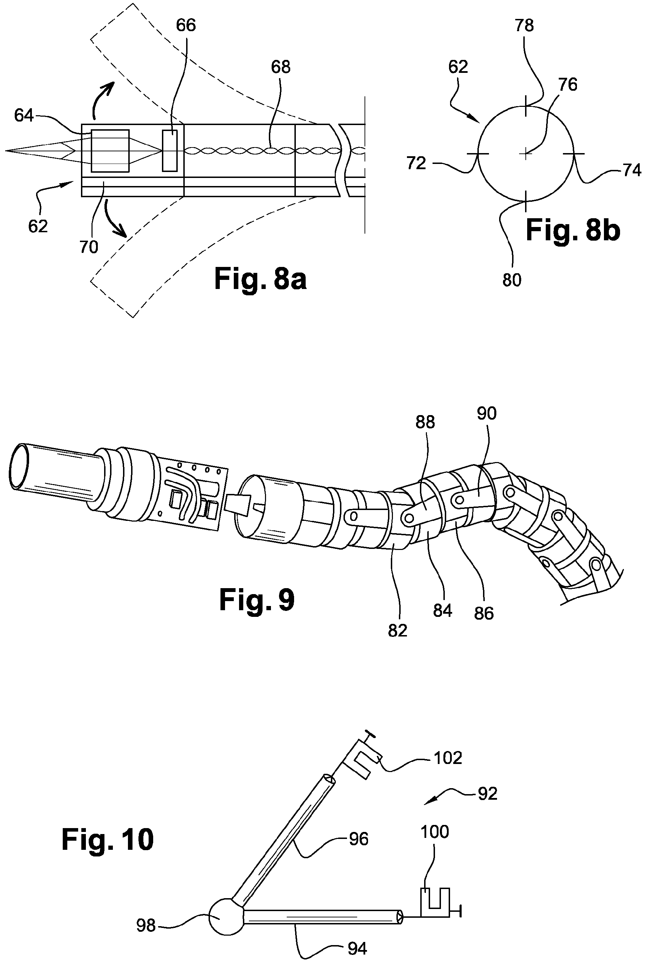

Le dispositif comprend des moyens de prise d'images et de transmission d'images représentés en figure 8a. Les moyens de prise d'image comprennent un objectif de formation d'image 64 transmettant l'image à une caméra 66, telle qu'une caméra CCD, reliée en sortie à un convertisseur analogique numérique. L'image numérisée est ensuite transférée par un câble 68 à des moyens de visualisation externe tels qu'un moniteur d'un système de traitement informatique.

Dans une configuration particulière du dispositif selon l'invention, la caméra 66 comprend 500000 pixels ayant chacun un côté compris entre 8 et 12 µm.

Le dispositif comprend également des seconds moyens de transmission d'images prévus à l'intérieur de la gaine et comprenant un ensemble de composants optiques (non représentés) transmettant l'image formée par l'objectif jusqu'à un oculaire d'observation 58 porté par l'extrémité proximale de la poignée.

Le dispositif comprend également des moyens d'éclairage et de guidage de la lumière jusqu'à l'extrémité proximale de la gaine. Ces moyens comprennent par exemple un câble 70 de fibres optiques s'étendant depuis l'extrémité distale de la gaine jusqu'à une connexion 60 de raccordement à une source de lumière visible ou ultraviolette.

Afin de réaliser une pulvérisation des produits de ressuage dans la direction optimale vers la pièce et une observation adéquate de la zone traitée, le dispositif comprend des moyens de réglage de l'orientation de la tête d'examen 62 (figures 8a et 8b).

Ces moyens de réglage comprennent par exemple deux câbles guidés à l'intérieur de la gaine et fixés à leur extrémité distale sur la tête d'examen 62 en deux points diamétralement opposés 72, 74. Les parties proximales des câbles sont enroulées en tension dans des sens inverses sur un organe de commande 76 rotatif de la poignée (figure 2). Ainsi, en tournant l'organe de commande 76 dans un sens donné, la tête d'examen 62 peut être inclinée dans un plan passant par les deux points de fixation 72, 74 et par l'axe central 76 de la tête d'examen.

Il est possible d'ajouter deux câbles supplémentaires fixés à leur extrémité distale sur la tête d'examen 62 en deux points diamétralement opposés 78, 80 et à 90° des deux points de fixation 72, 74 des deux premiers câbles. Les parties proximales de ces deux câbles supplémentaires sont également enroulées sur un organe rotatif de la poignée. Avec un tel agencement, il est ainsi possible d'incliner la tête d'examen 62 dans deux plans orthogonaux dont l'un passe par les points 72, 74 et l'autre passe par les points 78, 80, ce qui permet d'orienter l'extrémité distale de la gaine dans quatre directions différentes.

Pour permettre l'inclinaison de la tête d'examen 62, celle-ci peut comprendre des anneaux métalliques 82, 84, 86 non jointifs (figure 9). Un anneau 84 est relié à un anneau aval 82 par deux lamelles 88 espacées angulairement de 180°, articulées en rotation sur la périphérie externe de l'anneau aval 82 et fixées sur l'anneau 84 à 180° l'une de l'autre. L'anneau 84 est fixé à un anneau amont 86 par deux lamelles 90 également espacés angulairement de 180° et articulées en rotation à une extrémité sur la périphérie externe de l'anneau 84. Les secondes extrémités des deux lamelles 90 sont fixées sur un anneau amont 86 à 180° l'une de l'autre. Les lamelles 88 de jonction de l'anneau 84 à l'anneau aval 82 et les lamelles 90 de jonction de l'anneau 84 à l'anneau amont 86 sont espacées de 90° les unes par rapport aux autres (figure 9).

Chaque anneau comprend quatre pontets (non représenté) espacés à 90° deux à deux pour le guidage en coulissement des câbles fixés à l'extrémité distale de la tête d'examen 62.

Dans une variante de réalisation de l'invention, les câbles de commande de l'orientation de la tête d'examen sont enroulés en tension sur un organe rotatif motorisé qui peut être logé dans la poignée.

La figure 10 représente un bras de maintien 92 de la poignée de l'endoscope. Ce bras de maintien 92 comprend deux tiges 94, 96 articulées à rotation en 98 l'une par rapport à l'autre à une première de leurs extrémités. Une pince 100, 102 est articulée par une liaison pivot à la seconde extrémité de chaque tige 94, 96. Une première pince 100 est destinée à venir serrer la poignée de l'endoscope 36 et l'autre pince 102 est destinée à venir se fixer sur une partie de la turbomachine pour permettre l'utilisation de l'endoscope en position statique.

Dans une variante de réalisation de l'invention (non représentée), les moyens d'alimentation en air sous pression sont reliés à un raccord débouchant avec le tube rigide dans une cavité commune formée à l'intérieur de la poignée, l'extrémité proximale du conduit débouchant à l'intérieur de cette cavité pour permettre le passage du capillaire inséré depuis l'extrémité libre du tube rigide et l'écoulement du flux d'air sous pression jusqu'à l'extrémité distale de la gaine. Dans cette configuration, l'embout comprend un seul orifice central d'introduction d'un capillaire.

Dans une réalisation pratique de l'invention, la gaine 28 a une section circulaire d'un diamètre compris entre 6 et 10 millimètres (mm), le conduit 30 de passage du capillaire 32 a un diamètre de l'ordre de 1,2 mm et le capillaire 32 a un diamètre d'environ 0,8 mm. La gaine flexible peut avoir une largeur de l'ordre de 1,5 m.

Dans une autre réalisation qui n'est pas comprise dans l'invention revendiquée, la gaine pourrait être rigide et le capillaire souple ou bien rigide. Toutefois, une gaine rigide se présentant sous la forme d'une canne comme dans la technique antérieure, ne permet pas d'intervenir dans des zones internes de la turbomachine uniquement accessibles par des passages incurvés ou non rectilignes.

Ainsi, l'utilisation d'une gaine flexible et d'un capillaire souple permet le contrôle non destructif de zones difficilement accessibles sans nécessiter une dépose de la turbomachine dans un atelier de maintenance, ce qui réduit le temps de maintenance et les coûts d'exploitation de la turbomachine.

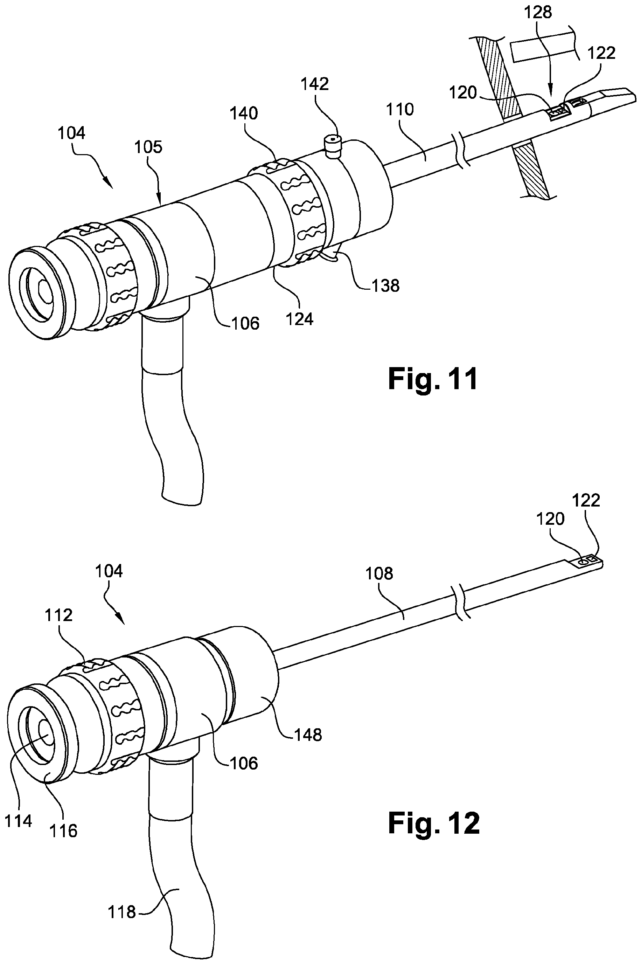

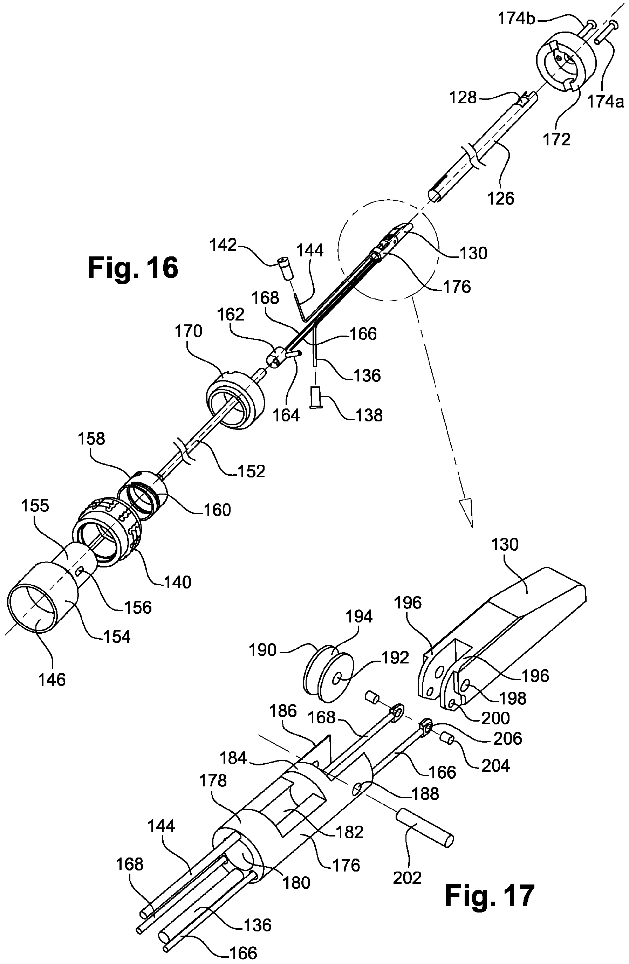

On se réfère maintenant aux figures 11 à 19 qui représentent d'autres modes de réalisation de l'invention.

L'endoscope 104 comprend une poignée 105 comportant une partie proximale 106 et une partie distale 124 et une gaine formant un tube d'inspection distal rigide 108. Sur la figure 11, le tube 108 est engagé dans un tube d'inspection 110. La poignée 106 comporte une bague de mise au point 112 et un oculaire 114 logé dans une bonnette proximale 116 susceptible d'être connectée à une caméra endoscopique. L'endoscope 104 comporte une voie de transmission de lumière d'éclairage comprenant un faisceau de fibres d'éclairage (non représenté) se prolongeant dans un câble d'éclairage 118 solidaire de la poignée 106. La partie distale du tube 108 comporte un hublot 120 à l'extrémité distale d'une voie optique image de l'endoscope 104, et une fenêtre 122 derrière laquelle peut être collée l'extrémité distale préalablement polie du faisceau de fibres d'éclairage.

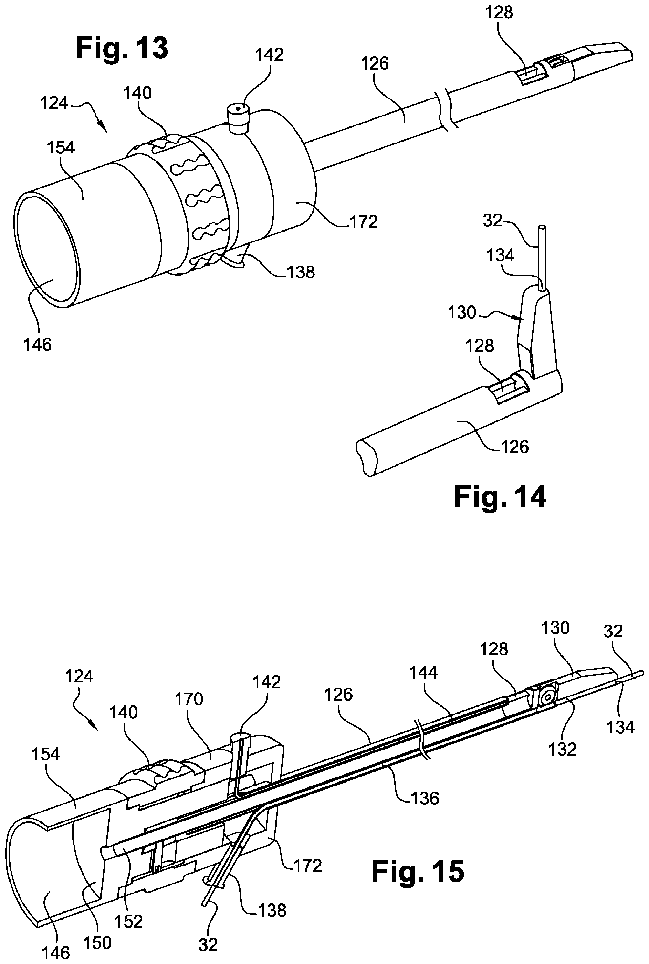

L'endoscope comprend un tube 126 comportant une ouverture latérale distale 128 sous laquelle sont positionnées le hublot ou fenêtre de vision 120 et la fenêtre d'éclairage 122 de l'endoscope 104 (figure 11). L'extrémité distale du tube 110 est solidaire d'un doigt articulé 130 comportant un canal interne 132 débouchant d'un côté sur un orifice 134, et de l'autre, dans un conduit ou canal de travail 136 logé dans le tube 110. Le canal de travail 136 débouche sur la poignée 124, dans une embase 138 constituant l'extrémité proximale du canal de travail 124. Le canal de travail 124 est prévu pour permettre l'insertion à coulissement d'un tube capillaire souple 32 (figure 15), susceptible d'être introduit par l'embase 138 et sortir par l'orifice 134. Un tel tube capillaire est destiné à la projection des produits de ressuage sur une pièce à contrôler. La poignée 124 comprend en outre une bague de commande 140 permettant de régler manuellement l'angulation du doigt articulé 130. La poignée 124 peut également comprendre une embase 142 connectable à une source d'air comprimé, en communication avec un tube de soufflage d'air 144 débouchant dans l'ouverture 128, parallèlement au hublot 120 et à la fenêtre d'éclairage 122.

Sur les figures 13, 15 et 16, la partie distale 124 de la poignée 105 comporte un logement proximal cylindrique 146 prévu pour recevoir l'extrémité distale cylindrique 148 de la partie proximale 106 de la poignée 105 de l'endoscope 104. Le logement 146 comporte une cloison distale 150 munie d'un orifice axial constituant l'extrémité proximale d'un tube cylindrique interne 152 prévu pour recevoir le tube 108 de l'endoscope 104. Des moyens d'assemblage et de fixation de la poignée 105 dans le logement 146 peuvent comprendre un dispositif d'indexation et de verrouillage (non représenté) permettant de positionner correctement l'extrémité distale du tube 108 de l'endoscope sous l'ouverture distale 128 de l'endoscope 104.

La partie distale 124 de la poignée 105 comprend une pièce cylindrique proximale 154 dont la partie proximale forme le logement cylindrique 146, et dont une partie distale tubulaire 155 comprend une fente longitudinale 156.

L'endoscope comprend une bague 140 de commande de l'angulation du doigt articulé distal 130. Une bague cylindrique 158 est montée fixement à l'intérieur de la bague de commande 140 et comprend une fente hélicoïdale 160 formée sur son pourtour. Une navette tubulaire 162 est montée à coulissement autour du tube interne 152 et comprend un doigt radial 164 sur sa périphérie externe. La navette 162 est solidaire de deux tiges de manœuvre longitudinales 166, 168 s'étendant à l'intérieur du tube 126 et ayant pour fonction de commander l'angulation du doigt articulé distal 130.

La bague de commande 140 et la bague cylindrique 158 sont montées autour de la partie distale tubulaire 155 de la pièce cylindrique proximale 154. La navette tubulaire 162 est montée à l'intérieur de la partie distale tubulaire 155 de la pièce cylindrique proximale 154 et le doigt radial 164 traverse la fente longitudinale 156 de la partie distale tubulaire 155 de la pièce cylindrique proximale 154 et son extrémité radialement externe vient se loger dans la fente hélicoïdale 160 de la bague cylindrique 158.

La partie distale 124 de la poignée 105 comprend également une pièce centrale 170 et une pièce distale 172 dont l'association avec la pièce cylindrique proximale 154 permet de bloquer en translation la partie distale 124 de la poignée 105 et la bague cylindrique 158 autour de la partie distale tubulaire 155 de la pièce cylindrique proximale 154 tout en formant deux orifices latéraux permettant le passage et la fixation des embases 138 et 142. Les pièces 154, 170, 172 peuvent ainsi être solidarisées par exemple au moyen de deux vis 174a, 174b engagées dans des orifices prévus à cet effet dans la pièce 172 et venant se visser dans la pièce 154.

En fonctionnement, la rotation de la bague de commande 140 autour de la partie distale tubulaire 155 de la pièce cylindrique proximale 154 induit un déplacement en translation du doigt radial 130 dans la fente longitudinale 156, ce qui induit un déplacement axial de la navette tubulaire 162.

La partie distale du tube 124 comprend une pièce distale 176 comportant
- une partie cylindrique tubulaire proximale 178 comportant un orifice interne 180 prévu pour recevoir l'extrémité distale du tube interne 152,
- un logement tubulaire médian 182 présentant l'ouverture latérale 128 et une cloison distale 184, le logement 182 étant prévu pour recevoir l'extrémité distale du tube 108 de l'endoscope 104 introduit dans le tube interne 152,
- deux oreilles longitudinales distales 186 comportant chacune un orifice transversal 188,
- un canal longitudinal dont l'extrémité proximale reçoit le tube de soufflage 144 et dont l'extrémité distale débouche dans le logement 182,
- un canal longitudinal dont l'extrémité proximale reçoit le canal de travail 136 et dont la partie distale débouche entre les deux oreilles 186, et
- deux canaux longitudinaux débouchant entre les deux oreilles distales 186 et recevant à coulissement les tiges de manœuvre 166, 168.

La partie distale de la pièce interne 176 est associée à une poulie interne 190 comprenant un orifice axial 192 perpendiculaire à l'axe du tube 126 et une gorge annulaire 194 prévue pour guider le tube capillaire 32 introduit dans le canal de travail 136 par l'embase 138. Le doigt articulé 130 comprend à son extrémité proximale deux oreilles 196 présentant chacune un orifice transversal distal 198 et un orifice transversal proximal 200.

La pièce 176, la poulie 190 et le doigt articulé 130 sont assemblés par un axe cylindrique 202 traversant successivement l'orifice 188 de l'une des oreilles distales 186 de la pièce 176, l'orifice 198 de l'une des oreilles proximales 196 du doigt 130, l'orifice 192 de la poulie 190, l'orifice 198 de l'autre des oreilles proximales 196, et enfin l'orifice 188 de l'autre des oreilles distales 186 de la pièce 176.

L'assemblage du doigt articulé 130 et des tiges de manœuvre 166, 168 s'effectue séparément pour chaque tige à l'aide d'un axe cylindrique transversal 204 respectif, introduit dans l'orifice distal 196 de l'une des deux oreilles 196 du doigt 130, puis, dans un orifice 206 prévu à l'extrémité distale de chaque tige de manœuvre 166, 168.

En fonctionnement, le doigt 130 peut ainsi basculer et être positionné angulairement entre une position axiale dans laquelle il est aligné avec l'axe du tube 124 (figure 13) et une position dans laquelle il est orienté perpendiculairement à l'axe du tube 15 (figure 14).

L'introduction d'un tube capillaire 32 dans le canal de travail 136, puis dans le canal 132, peut être effectué lorsque le doigt articulé 130 est en position axiale. Le positionnement de l'embouchure distale du capillaire 32 sur la pièce à contrôler est effectué en tournant la bague de commande 140 pour orienter le doigt 130 vers une direction perpendiculaire à l'axe du tube 126, et en réglant sous contrôle visuel à l'aide de l'endoscope 104, la longueur de la partie distale du tube capillaire 32 qui dépasse du doigt 130.

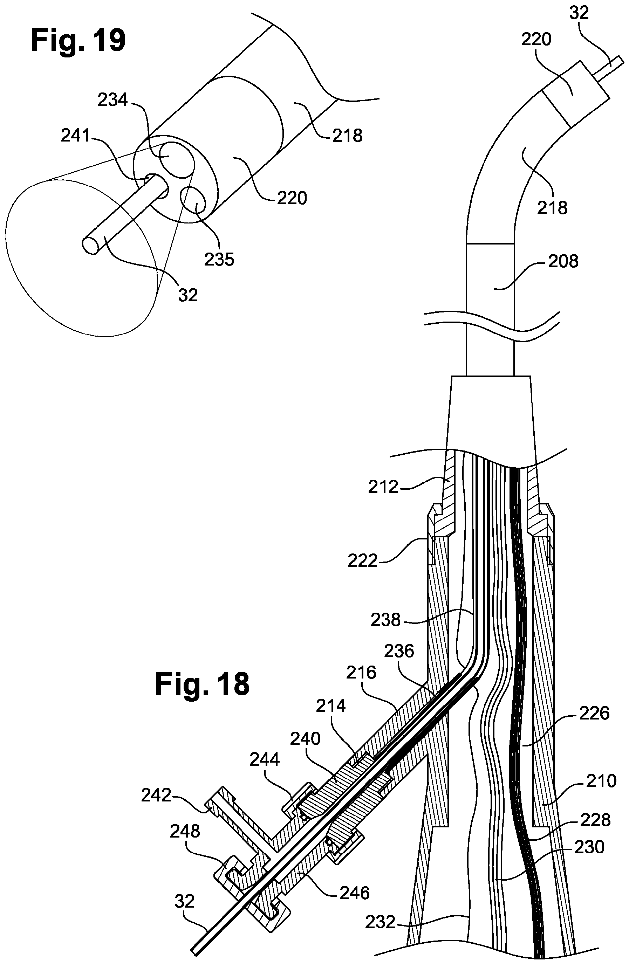

Les figures 18 et 19 représentent une sonde vidéoendoscopique flexible adaptée au contrôle par ressuage sous éclairage par une lumière UV et à l'accès à des zones internes d'une turbomachine.

La sonde vidéoendoscopique comprend une poignée de commande dont l'extrémité distale est solidaire d'un tube d'inspection 208 flexible, et dont l'extrémité proximale est généralement solidaire d'un câble ombilical (non représenté) permettant de relier la sonde à des dispositifs d'exploitation tels qu'un générateur de lumière.

Pour le contrôle par ressuage, la poignée de commande de la sonde est fixée à une pièce spécifique 210 dont l'extrémité distale est solidaire d'un manchon distal 212. La pièce 210 est une pièce tubulaire comportant un logement proximal axial dans lequel vient se fixer la poignée de commande. La pièce 210 comprend une entrée tubulaire latérale oblique 216 dont l'extrémité externe présente un filetage interne 214.

Le manchon 212 qui peut être réalisé dans un matériau souple, ceinture l'extrémité proximale du tube d'inspection 208. Le tube d'inspection 208 comporte un béquillage distal flexible 218 et une tête d'examen distale 220 logeant un dispositif optoélectronique comprenant des moyens d'éclairage et de prise d'images analogue à ceux décrits en référence aux figures 8a et 8b. Une bague écrou 222 est vissée sur un filetage externe 224 de l'extrémité axiale distale de la pièce 210 pour solidariser à étanchéité la pièce 210 au manchon 212.

La pièce 210 comporte un canal tubulaire axial 226 logeant les liaisons suivantes :
- un faisceau de fibres d'éclairage 228,
- quatre gaines souples 230, et
- un câble électrique multiconducteurs 232.

Le faisceau de fibres d'éclairage 228 relie sans discontinuité une fenêtre d'éclairage axiale 234 située sur une face distale de la tête distale 220, à l'extrémité proximale du câble ombilical de la sonde vidéoendoscopique. L'extrémité proximale du câble ombilical peut être connectée à un générateur d'éclairage susceptible de fournir aussi bien une lumière blanche qu'une lumière UV.

Les quatre gaines 230 sont prévues pour guider quatre câbles de commande souples dont les extrémités distales sont solidaires du béquillage distal 218 et dont les extrémités proximales sont actionnées par un organe de commande manuelle ou motorisée, qui peut être logé dans la poignée de commande. Les câbles de commande ainsi que l'organe de commande peuvent être similaires à ceux décrits en référence aux figures 8b et 9.

Le câble électrique multiconducteurs 232 relie le capteur d'image logé dans la tête distale 220 à un processeur vidéo qui peut être logé dans la poignée de commande. Le processeur vidéo a pour fonctions principales de synchroniser le capteur d'image distal et de transformer le signal électrique délivré par le capteur en un signal vidéo normalisé. Le capteur d'image est associé à un objectif 235 formant une fenêtre de vision également disposée sur la face distale de la tête 220.

L'entrée tubulaire oblique 216 de la pièce 210 est prévue pour recevoir la partie proximale 236 d'un conduit ou canal de travail, qui est fixée, par exemple par collage dans l'entrée tubulaire oblique 216. La partie proximale 236 peut être réalisée en un matériau rigide, par exemple métallique. L'extrémité distale de la partie proximale 236 du canal de travail est solidaire (à l'aide d'un dispositif démontable pour des questions de maintenance et non représenté) de l'extrémité proximale d'une partie proximale souple 238 du canal de travail, logée dans le tube d'inspection 208. L'extrémité distale 238 de la partie proximale du canal de travail débouche dans un orifice 241 ménagé sur la face distale de la tête distale ou tête d'examen 220 (figure 5A).

L'extrémité distale d'une pièce tubulaire intermédiaire 240 est vissée (ou collée) dans l'entrée tubulaire oblique 216 de la pièce 210 au moyen d'un filetage externe distal.

Une pièce de couplage 246 comprenant une entrée latérale 242 et une entrée axiale proximale, peut être associé de façon étanche à la pièce 240 au moyen d'une bague 244 vissée sur le pourtour de la pièce intermédiaire 240 et retenu axialement sur un rebord annulaire de la pièce de couplage. Un joint torique d'étanchéité est serré à l'interface entre la pièce de couplage 242 et la pièce tubulaire intermédiaire 240. L'entrée axiale proximale de la pièce de couplage 246 présente un diamètre légèrement supérieur à celui d'un capillaire souple 32 susceptible d'y être introduit. L'entrée axiale proximale de la pièce 246 peut être équipée d'un capuchon d'étanchéité amovible 248 réalisé en matériau souple et présentant un orifice axial dans lequel l'opérateur peut introduire un tube capillaire 32 qui est susceptible de glisser dans le canal de travail 236, 238, jusqu'à ce que sa partie distale émerge de l'orifice 241 dans la face distale de la tête distale 220. L'entrée latérale 242 de la pièce 246 est raccordée à des moyens d'alimentation en air sous pression. Dans ces conditions, l'air introduit par l'entrée 242 circule dans l'espace annulaire compris entre la surface externe du tube capillaire 32 et la surface interne du canal de travail 236, 238, jusqu'à déboucher par l'orifice 241 de la tête distale 80. De cette manière, l'air ainsi introduit par l'entrée 242 peut empêcher les produits de ressuage projetés par l'embouchure distale du tube capillaire 32 de se déposer sur la fenêtre de vision 235 et la fenêtre d'éclairage 234 sur la face distale de la tête 220, et assurer nettoyage de ces fenêtres. L'air introduit dans le canal de travail évite également la pollution du canal de travail par des gouttes de produit de ressuage.

Le fait de pouvoir démonter directement le dispositif de couplage 246 constitue un avantage important en matière de maintenance, dans la mesure où il facilite le nettoyage périodique du canal de travail 236, 238.

Selon un autre mode de réalisation, le dispositif d'éclairage de la sonde vidéoendoscopique peut comprendre au moins deux diodes LED, l'une émettant de la lumière blanche, l'autre de la lumière UV, ces deux diodes LED étant installées dans l'extrémité distale de la sonde.

Dans les modes de réalisation comprenant un faisceau de fibres d'éclairage, le faisceau de fibres d'éclairage peut être remplacé par un guide de lumière liquide apte à transmettre la lumière UV et la lumière blanche, ou associé à un tel guide de lumière liquide qui peut être amovible.

Il apparaîtra clairement à l'homme de l'art que la présente invention est susceptible de diverses variantes de réalisation et diverses applications. En particulier, la sonde vidéoendoscopique précédemment décrite peut comporter un tube de soufflage d'air distinct du canal de travail et débouchant dans la tête distale 220 de la sonde de manière à envoyer de l'air sur les fenêtres d'éclairage et de vision.

L'endoscope selon l'invention peut être utilisé avec des tubes d'inspection flexible ou rigide. Dans le cas d'un endoscope ou vidéoendoscope à tube d'inspection souple équipé d'un béquillage distal, les fenêtres de vision et d'éclairage peuvent être latérales ou axiales. Dans le cas où ces fenêtres sont axiales, le tube 126 comporte une ouverture permettant d'orienter ces fenêtres latéralement à l'aide du béquillage. Dans le cas où ces fenêtres sont latérales, le béquillage pourrait ne pas être utilisé.

Dans les différentes réalisations de l'invention décrites précédemment, les fibres d'éclairage sont en un matériau apte à transmettre la lumière visible et la lumière UV, par exemple en quartz ou en un polymère apte à transmettre à la fois la lumière blanche et la lumière UV.

Grâce au soufflage d'air sur les moyens d'éclairage et de prise d'images, il n'est à aucun moment nécessaire de retirer le tube d'inspection de l'orifice d'inspection endoscopique, notamment pendant ou à la suite de la projection des produits de ressuage sur la pièce à contrôler, et ce jusqu'à la fin du contrôle visuel de la pièce sous éclairage en lumière UV, ce qui réduit le temps nécessaire aux opérations de contrôle endoscopique.

L'injection d'air dans le canal de travail 236, 238 durant l'injection des produits de ressuage, combinée au fait que le tube capillaire émerge de l'extrémité distale du canal de travail, contribue à minorer fortement la pollution, tant du canal de travail que de la tête d'examen.

Il peut être préférable d'éviter de mélanger les divers produits de ressuage. Dans ce cas, un tube capillaire 32 différent peut être utilisé pour l'injection de chaque produit de ressuage. Les tubes capillaires utilisés peuvent ainsi être à usage unique.

## Revendications

1. Dispositif de recherche de défauts sur des pièces masquées accessibles par un passage non rectiligne, dans une turbomachine telle qu'un turboréacteur ou un turbopropulseur d'avion, comprenant une gaine tubulaire (28, 126, 208) et des moyens de guidage de lumière et de transmission d'images logés dans la gaine pour l'éclairage et l'observation d'une pièce à examiner, **caractérisé en ce qu'**il comprend une tête d'examen (62, 220) à l'extrémité distale de la gaine (28, 126, 208) comportant des moyens d'éclairage et de prise d'images reliés aux moyens de guidage de lumière et de transmission d'images logés dans la gaine (28, 208), des moyens de pulvérisation en succession de produits de ressuage sur la pièce à examiner, comportant un capillaire (32) guidé à coulissement dans un conduit (30) logé dans la gaine (28, 126, 208) et **en ce qu'**il comprend des moyens de réglage de l'orientation de la tête d'examen à l'extrémité distale de la gaine,
dans lequel la gaine tubulaire (28, 218) est flexible et le capillaire (32) est souple, et
dans lequel l'extrémité distale de la gaine (28) est équipée d'un embout de pulvérisation à son extrémité distale.

2. Dispositif selon la revendication 1, **caractérisé en ce qu'**il comprend des moyens de soufflage d'air sur les moyens d'éclairage et de prise d'images montés à l'extrémité distale de la gaine.

3. Dispositif selon la revendication 2, **caractérisé en ce que** les moyens de soufflage d'air comprennent des moyens d'alimentation en air sous pression (48) raccordés à un tube de soufflage (30) débouchant à son extrémité distale au voisinage des moyens d'éclairage et de prise d'images.

4. Dispositif selon la revendication 3, **caractérisé en ce que** les moyens d'alimentation en air sous pression sont raccordés à l'extrémité proximale du conduit (30, 236) de passage du capillaire (32) pour l'alimentation du conduit (30, 236) par un flux d'air continu sortant par son extrémité distale.

5. Dispositif selon l'une des revendications 1 à 4, **caractérisé en ce que** l'extrémité proximale de la gaine (28, 208) est reliée à une poignée (36) destinée à être fixée sur une turbomachine et **en ce que** le conduit (30, 136, 241) logeant le capillaire (32) se prolonge à l'intérieur de la poignée (36) et est raccordé à un tube rigide (38) porté par la poignée (36) et servant à l'insertion du capillaire (32) à l'intérieur du conduit (30).

6. Dispositif selon la revendication 5, **caractérisé en ce qu'**il comprend des moyens d'immobilisation en coulissement du capillaire (32) à l'intérieur du conduit (30).

7. Dispositif selon la revendication 6, **caractérisé en ce que** les moyens d'immobilisation comprennent un embout (40) comportant des moyens de serrage du capillaire (32) et destiné à être engagé et retenu sur l'extrémité libre du tube rigide (38).

8. Dispositif selon l'ensemble des revendications 4 et 7, **caractérisé en ce que** l'embout (40) comprend un passage (46) débouchant à l'intérieur du tube (38) et formant une entrée destinée à être raccordée aux moyens d'alimentation en air sous pression (48).

9. Dispositif selon l'une des revendications précédentes, **caractérisé en ce que** les moyens de réglage de l'orientation comprennent un organe de commande (76, 140) de l'orientation angulaire de la tête d'examen monté à rotation sur la poignée endoscopique et relié à des moyens de transmission de la commande d'orientation de la tête d'examen, ces moyens de transmission étant logés dans la gaine (28, 126, 230).

10. Dispositif selon la revendication 8, **caractérisé en ce que** les moyens de réglage de l'orientation de la tête d'examen comprennent au moins deux câbles guidés à l'intérieur de la gaine et fixés à leur extrémité distale sur la tête d'examen (62, 220) en deux points diamétralement opposés et enroulés en tension à leur partie proximale dans des sens inverses sur un organe de commande rotatif situé sur la poignée (36).

11. Dispositif selon la revendication 9, **caractérisé en ce que** les moyens de transmission de la commande d'orientation comprennent au moins une tige (166, 168) s'étendant à l'intérieur de la gaine (126) et reliée à son extrémité distale à un mécanisme de conversion du mouvement de rotation de la bague en un mouvement de translation de la tige, la tige étant reliée par son extrémité distale à un doigt (130) articulé à rotation sur l'extrémité distale de la gaine (126) autour d'un axe perpendiculaire à celle-ci.

12. Dispositif selon la revendication 11, **caractérisé en ce que** le doigt distal (130) comprend un canal axial (132) de passage du capillaire (32) et est articulé à rotation entre une position dans laquelle il est aligné avec l'axe de la gaine (126) et une position dans laquelle il est orienté perpendiculairement à l'axe de la gaine (126).

13. Dispositif selon la revendication 1, **caractérisé en ce que** l'embout de pulvérisation à l'extrémité distale du capillaire (32) est amovible et sélectionnable dans un ensemble d'embouts de pulvérisation radiale, prograde et rétrograde.

14. Dispositif selon l'une des revendications précédentes, **caractérisé en ce que** la gaine (28) a une section circulaire d'un diamètre compris entre 6 et 10 mm et le conduit (30) de passage du capillaire (32) a un diamètre de l'ordre de 1,2 mm, le capillaire (32) ayant un diamètre de l'ordre de 0,8 mm.

15. Procédé de contrôle non destructif par ressuage d'une pièce masquée au moyen du dispositif selon l'une des revendications 1 à 14, **caractérisé en ce qu'**il consiste à :
- insérer et guider la tête d'examen à l'intérieur d'une structure tridimensionnelle jusqu'à une position d'examen de la pièce à contrôler,
- la tête d'examen étant placée en regard de la pièce à examiner, alimenter l'extrémité proximale du capillaire avec un premier produit de ressuage et appliquer ce premier produit par l'extrémité distale du capillaire sur la pièce à examiner ;
- retirer par coulissement le capillaire du conduit dans lequel il est logé,
- introduire par coulissement dans le conduit un second capillaire et amener son extrémité distale au voisinage de la pièce à examiner, puis alimenter l'extrémité proximale de ce second capillaire avec un second produit de ressuage et appliquer ce second produit par l'extrémité distale sur la pièce à examiner.

## Patentansprüche

1. Vorrichtung zur Fehlersuche an durch einen nicht geradlinigen Durchgang zugänglichen, verdeckten Teilen in einem Triebwerk, wie einem Turbostrahltriebwerk oder einem Turboprop-Triebwerk von Flugzeugen, enthaltend einen rohrförmigen Schlauch (28, 126, 208) und in dem Schlauch aufgenommene Lichtleit- und Bildübertragungsmittel zur Beleuchtung und Beobachtung eines zu prüfenden Teils,
**dadurch gekennzeichnet, dass**
sie am distalen Ende des Schlauchs (28, 126, 208) einen Prüfkopf (62, 220) mit Beleuchtungs- und Bildaufnahmemitteln enthält, die mit den in dem Schlauch (28, 208) aufgenommenen Lichtleit- und Bildübertragungsmitteln verbunden sind, sowie Mittel zum aufeinanderfolgenden Aufsprühen von Farbeindringmitteln auf das zu prüfende Teil, mit einer Kapillare (32), die in einer in dem Schlauch (28, 126, 208) aufgenommenen Leitung (30) verschiebbar geführt ist,
und dass sie Mittel zum Einstellen der Ausrichtung des Prüfkopfes am distalen Ende des Schlauchs enthält,
wobei der rohrförmige Schlauch (28, 218) flexibel und die Kapillare (32) nachgiebig ausgeführt ist, und
wobei das distale Ende des Schlauchs (28) mit einem Sprühansatzstück an seinem distalen Ende versehen ist.

2. Vorrichtung nach Anspruch 1,
**dadurch gekennzeichnet, dass** sie Mittel zum Blasen von Luft auf die am distalen Ende des Schlauchs angebrachten Beleuchtungs- und Bildaufnahmemittel enthält.

3. Vorrichtung nach Anspruch 2,
**dadurch gekennzeichnet, dass** die Luftblasmittel Mittel zur Versorgung mit Druckluft (48) enthalten, die an ein Einblasrohr (30) angeschlossen sind, das mit seinem distalen Ende nahe der Beleuchtungs- und Bildaufnahmemittel ausmündet.

4. Vorrichtung nach Anspruch 3,
**dadurch gekennzeichnet, dass** die Mittel zur Versorgung mit Druckluft an das proximale Ende der Leitung (30, 236) für den Durchgang der Kapillare (32) angeschlossen sind, um die Leitung (30, 236) mit einem kontinuierlichen Luftstrom zu versorgen, der an ihrem distalen Ende austritt.

5. Vorrichtung nach einem der Ansprüche 1 bis 4,
**dadurch gekennzeichnet, dass** das proximale Ende des Schlauchs (28, 208) mit einem Griff (36) verbunden ist, der zur Befestigung an einem Triebwerk bestimmt ist, und dass die die Kapillare (32) aufnehmende Leitung (30, 136, 241) sich im Inneren des Griffs (36) fortsetzt und an ein starres Rohr (38) angeschlossen ist, das von dem Griff (36) getragen wird und zum Einführen der Kapillare (32) in das Innere der Leitung (30) dient.

6. Vorrichtung nach Anspruch 5,
**dadurch gekennzeichnet, dass** sie Mittel zur verschiebbaren Festlegung der Kapillare (32) im Inneren der Leitung (30) enthält.

7. Vorrichtung nach Anspruch 6,
**dadurch gekennzeichnet, dass** die Festlegungsmittel ein Ansatzstück (40) enthalten, das Mittel zum Festklemmen der Kapillare (32) aufweist und dazu bestimmt ist, auf das freie Ende des starren Rohrs (38) aufgesetzt und daran festgehalten zu werden.

8. Vorrichtung nach Anspruch 4 und 7 zusammengenommen,
**dadurch gekennzeichnet, dass** das Ansatzstück (40) einen Durchgang (46) aufweist, der in das Innere des Rohrs (38) mündet und einen Einlass bildet, der dazu bestimmt ist, an die Mittel zur Versorgung mit Druckluft (48) angeschlossen zu werden.

9. Vorrichtung nach einem der vorhergehenden Ansprüche,
**dadurch gekennzeichnet, dass** die Mittel zum Einstellen der Ausrichtung ein Steuerorgan (76, 140) für die Winkelausrichtung des Prüfkopfes enthalten, das drehbar am endoskopischen Griff gelagert und mit Mitteln zum Übertragen des Steuerbefehls zum Ausrichten des Prüfkopfes verbunden ist, wobei diese Übertragungsmittel in dem Schlauch (28, 126, 230) aufgenommen sind.

10. Vorrichtung nach Anspruch 8,
**dadurch gekennzeichnet, dass** die Mittel zum Einstellen der Ausrichtung des Prüfkopfes mindestens zwei Kabel aufweisen, die im Inneren des Schlauchs geführt sind und mit ihrem distalen Ende an zwei diametral gegenüberliegenden Stellen am Prüfkopf (62, 220) befestigt sind und mit ihrem proximalen Abschnitt auf ein am Griff (36) angeordnetes drehbares Steuerorgan unter Spannung gegenläufig aufgewickelt sind.

11. Vorrichtung nach Anspruch 9,
**dadurch gekennzeichnet, dass** die Mittel zum Übertragen des Ausrichtsteuerbefehls zumindest eine Stange (166, 168) aufweisen, die sich im Inneren des Schlauchs (126) erstreckt und an ihrem distalen Ende mit einem Mechanismus zur Umwandlung der Drehbewegung des Rings in eine Translationsbewegung der Stange verbunden ist, wobei die Stange an ihrem distalen Ende mit einem Finger (130) verbunden ist, der am distalen Ende des Schlauchs (126) um eine senkrecht zu diesem verlaufende Achse drehbar angelenkt ist.

12. Vorrichtung nach Anspruch 11,
**dadurch gekennzeichnet, dass** der distale Finger (130) einen axialen Kanal (132) für den Durchgang der Kapillare (32) aufweist und zwischen einer Position, in der er mit der Achse des Schlauchs (126) fluchtet, und einer Position, in der er senkrecht zur Achse des Schlauchs (126) ausgerichtet ist, drehbar angelenkt ist.

13. Vorrichtung nach Anspruch 1,
**dadurch gekennzeichnet, dass** das Sprühansatzstück am distalen Ende der Kapillare (32) abnehmbar und aus einem Satz von Ansatzstücken zum radialen, prograden und retrograden Sprühen auswählbar ist.

14. Vorrichtung nach einem der vorhergehenden Ansprüche,
**dadurch gekennzeichnet, dass** der Schlauch (28) einen kreisförmigen Querschnitt mit einem Durchmesser zwischen 6 und 10 mm hat und die Leitung (30) zum Durchgang der Kapillare (32) einen Durchmesser in der Größenordnung von 1,2 mm hat, wobei die Kapillare (32) einen Durchmesser in der Größenordnung von 0,8 mm hat.

15. Verfahren zur zerstörungsfreien Prüfung eines verdeckten Teils durch Farbeindringprüfung mittels der Vorrichtung nach einem der Ansprüche 1 bis 14,
**dadurch gekennzeichnet, dass** es umfasst:
- Einsetzen und Führen des Prüfkopfes im Inneren einer dreidimensionalen Struktur bis zu einer Prüfposition des zu prüfenden Teils,
- nach Anordnen des Prüfkopfes gegenüber dem zu prüfenden Teil, Versorgen des proximalen Endes der Kapillare mit einem ersten Farbeindringmittel und Auftragen dieses ersten Mittels durch das distale Ende der Kapillare auf das zu prüfende Teil;
- Herausschieben der Kapillare aus der diese aufnehmenden Leitung,
- Einschieben einer zweiten Kapillare in die Leitung und Führen ihres distalen Endes in die Nähe des zu prüfenden Teils, dann Versorgen des proximalen Endes dieser zweiten Kapillare mit einem zweiten Farbeindringmittel und Auftragen dieses zweiten Mittels durch das distale Ende auf das zu prüfende Teil.

## Claims

1. A device for searching for defects on parts that are masked and accessible via a passage that is not rectilinear inside a turbine engine such as an airplane turboprop or turbojet, comprising a tubular sheath (28, 126, 208) and light-guide means and image-transmission means housed in the sheath in order to illuminate and observe a part for inspection, **characterized in that** it comprises an examination head (62, 220) at the distal end of the sheath (28, 126, 208) having illumination means and image-taking means connected to the light-guide means and to the image-transmission means housed in the sheath (28, 208), means for spraying a succession of penetrant test materials on the part for inspection, comprising a capillary (32) slidably guided inside a duct (30) housed in the sheath (28, 126, 208), and **in that** it includes means for adjusting the orientation of the examination head at the distal end of the sheath,
wherein the tubular sheath (28, 218) is flexible, and **in that** the capillary (32) is flexible, and
wherein the distal end of the sheath (28) is fitted with a spray endpiece at its distal end.

2. A device according to claim 1, **characterized in that** it includes means for blowing air on the illumination means and on the image-taking means located at the distal end of the sheath.

3. A device according to clam 2, **characterized in that** the air-blow means comprise means (48) for feeding air under pressure that are connected to a blow tube (30) leading at its distal end to the vicinity of the illumination means and the image-taking means.

4. A device according to claim 3, **characterized in that** the means for feeding air under pressure are connected to the proximal end of the duct (30, 236) for passing the capillary (32) in order to feed the duct (30, 236) with a continuous stream of air that leaves via its distal end.

5. A device according to any one of claims 1 to 4, **characterized in that** the proximal end of the sheath (28, 208) is connected to a handle (36) for fastening to the engine, and **in that** the duct (30, 136, 241) housing the capillary (32) is extended inside the handle (36) and is connected to a rigid tube (38) carried by the handle (36) and serving to insert the capillary (32) into the inside of the duct (30).

6. A device according to claim 5, **characterized in that** it includes holder means for preventing the capillary (32) from sliding inside the duct (30).

7. A device according to claim 6, **characterized in that** the holder means comprise an endpiece (40) including means for clamping onto the capillary (32) and designed to be engaged and held on the free end of the rigid tube (38) .

8. A device according to claims 4 and 7 taken together, **characterized in that** the endpiece (40) includes a passage (46) leading to the inside of the tube (38) and forming an inlet for connection to the means (48) for feeding air under pressure.

9. A device according to any preceding claim, **characterized in that** the orientation adjustment means comprise a control member (76, 140) for controlling the angular orientation of the examination head, which member is rotatably mounted on the endoscope handle and is connected to transmission means for transmitting the orientation control to the examination head, these transmission means being housed in the sheath (28, 126, 230) .

10. A device according to claim 8, **characterized in that** the means for adjusting the orientation of the examination head comprise at least two cables guided inside the sheath and fastened at their distal ends to the examination head (62, 220) at two diametrically opposite points, and wound under tension at their proximal portions in opposite directions on a rotary control member situated on the handle (36).

11. A device according to claim 9, **characterized in that** the means for transmitting the orientation control comprise at least one rod (166, 168) extending inside the sheath (126) and connected at its distal end to a mechanism for converting rotary movement of the ring into movement in translation of the rod, the rod being connected by its distal end to a finger (130) that is pivotally hinged to the distal end of the sheath (126) about an axis that is perpendicular to the sheath.

12. A device according to claim 11, **characterized in that** the distal finger (130) includes an axial channel (132) for passing the capillary (32) and is hinged to pivot between a position in which it is in alignment with the axis of the sheath (126) and a position in which it is oriented perpendicularly to the axis of the sheath (126).

13. A device according to claim 1, **characterized in that** the spray endpiece at the distal end of the capillary (32) is removable and can be selected from a set of spray endpieces for spraying radially, forwards, or backwards.

14. A device according to any preceding claim, **characterized in that** the sheath (28) is of circular section with a diameter lying in the range 6 mm to 10 mm, and the duct (30) for passing the capillary (32) has a diameter of about 1.2 mm, the capillary (32) having a diameter of about 0.8 mm.

15. A method of non-destructive penetrant testing of a part that is masked, by using a device according to any one of claims 1 to 14, **characterized in that** it consists in:
. inserting and guiding the examination head inside a three-dimensional structure to a position for examining the part for inspection;
. with the examination head placed facing the part for inspection, feeding the proximal end of the capillary with a first penetrant test material and applying this first material via the distal end of the capillary to the part for inspection;
. slidably withdrawing the capillary from the duct in which it is housed; and
. slidably inserting a second capillary into the duct and bringing its distal end into the vicinity of the part for inspection, and then feeding the proximal end of the second capillary with a second penetrant test material and applying the second material via the distal end to the part for inspection.
